# EUROPEAN PATENT APPLICATION

(11) **EP 2 278 295 A1**
(43) Date of publication of application: **26.01.2011**
(21) Application number: 09166319.5
(22) Date of filing: 24.07.2009
(51) Int. Cl.: G01N 1/31, G01N 1/44, G01N 1/36

(54) **Single cavity tissue histology tissue-processor**

(71) Applicant: Milestone S.r.l., 24010 Sorisole (BG) (IT)
(72) Inventor: Visinoni, Francesco, I-24030 Mozzo Borghetto (BG (IT); Bellini, Marco, I-24124 Bergamo (IT)
(74) Representative: Rupp, Christian

(57) **Abstract**

A system and a method for processing tissue specimens, comprising a cavity for processing said tissue specimens, and a fluid transfer system to transfer at least one of a plurality of fluids from a plurality of storage containers to the inside and out of said cavity. The cavity is connected to at least one of a microwave generating device for applying microwave radiation to an inside of the cavity, and a thermal energy generating device for generating a positive thermal energy gradient inside the cavity.

## Description

### FIELD OF THE INVENTION

The present invention relates to the processing of organic tissue specimens that are subject to further investigation. More specifically, the present invention relates to processing of organic tissue specimens at least via a combination of microwave, and thermal treatments.

### BACKGROUND OF THE INVENTION

Pathology specimens for diagnostic, and for anatomy pathology are presently prepared according to a conventional method, that exemplarily comprises:

The tissue to be examined is first treated with formalin or a saline solution to stop the process of decay, and to stabilize the tissue so as to protect it against the physical and chemical rigors of processing.

The most recent pathology guidelines, in particular the ones regarding the restricted protocol for the breast tissue preparation, released by CAP (College of American Pathologists) and by the FDA (Food and Drug Administration) for the U.S. market prescribe that the tissues to be studied should not exceed spending a period of 48 hours fixation in formalin. This restriction results in a logistic problem for the laboratories that employ conventional methods, especially during weekends and holidays.

For example, if a breast specimen is received late on Friday afternoon, it cannot be prepared during the same day, but must stay in the fixative (formalin) before it will be completely processed on the following Monday morning. In cases like these, the exposure of the tissue to formalin is longer than 48 hours.

In a second step of the conventional method, the sample is dehydrated, i.e. some or all of the free water contained in the specimen being removed therefrom. During this procedure, various cellular components are as well dissolved by the dehydrating fluids, such as lipids, which are extracted, and water soluble proteins, which are dissolved in aqueous alcohols.

The third step includes the treatment of the tissue with another solvent, the so-called clearing agent (which also removes lipids). Clearing is the transition step between dehydration and infiltration with a supporting medium. Since many dehydrants are immiscible with said subsequently applied supporting medium, a solvent used is miscible both with the dehydrant and with the embedding medium to facilitate the transition between dehydration step and a subsequent infiltration step.

The last step in the processing of tissue specimens involves infiltrating the tissue cavities and cells with a supporting medium, such as a wax, and finally embedding the tissue in the medium which will provide sufficient external support during the ensuing processing.

The commercially available conventional tissue specimen processors employ the above described method and use only one retort for the complete tissue processing procedure, moving in and out during the sequence of reagents (up to 12) and during at least three sequences of liquid wax. The transfer of liquid melted wax, normally between 55 °C to 65 °C, through the liquid circuit and reagent valve is a critical technical point for the instrument's performance. If the users don't perform regular cleaning procedures and intensive preventive maintenance at least on this component of the conventional type units, their reliability is seriously compromised.

The conventional methods show, besides the ones highlighted above, a variety for other disadvantages, such as long processing times of the specimens, which may amount up to 50 hours per sample. Furthermore, large amounts of dehydrating agent(s) and clearing agent(s) have to be employed. In a normal procedure, the specimens are treated several times with the dehydrating agent, e.g. ethanol in rising concentrations (up to 100% ethanol), and subsequently several times with the clearing agent, in order to get rid of the dehydrating agent. Since large amounts of solvents have to be used, said solvents even being of high purity, the costs of such procedures are considerable.

A histoprocessing procedure that attempts to solve some of the disadvantages highlighted above, exhibiting shortened processing times is known from the article "The Two-Step Vacuum-Microwave Method for Histoprocessing" by M.E. Boon et al., European Journal of Morphology, Vol. 33, No. 4, 1995, pages 349-358. The histoprocessing method of organic tissues disclosed therein includes the steps of fixing the tissue, dehydrating the sample, clearing the sample and embedding the sample in paraffin, whereby the dehydration and clearing of the sample are carried out simultaneously in 100%-isopropanol, in a vacuum chamber heated by microwaves. Isopropanol is used in this step because it is both a weak dehydrator and a clearing agent. Temperature is controlled at 55°C and the pressure at 0,04 Mpa (400 mbar) such that the tissue can endure the hazards of the treatment without adverse affects.

Proprietary technologies attempt as well to solve some of the above highlighted disadvantages, like the ones embedded in the Pathos system (TM of Milestone SRL, Italy). Said technology exhibits a different sequence of processing steps for the pathology sample, such as starting with a step of lowering the rack of samples rack into a microwave cavity. A subsequent step of fixation-dehydrationclearing that involves at least the extraction of lipids and the substitution of water molecules with ethanol or isopropanol is then performed. Formalin is added and fixation is carried out at a selected temperature and time. The excess formalin is flushed out. Subsequently, a rinsing step with ethanol is ran to remove excess formalin. Ethanol is then added to carry out rapid dehydration of tissue, and subsequently ethanol is flushed out. Isopropanol is added and clearing is carried out. When using Milestone the solution, the last two steps mentioned above are condensed into one. The excess tissue solvents evaporate under vacuum. The dry rack is then transferred to a resistance, heated cavity with paraffin at temperatures of 65-75°C. While heating the cavity with an outside resistance, wax impregnation is carried out under preset vacuum/temperature conditions. Upon completion of the procedure, the apparatus will notify the operator with an audible/visual alarm. For tissue preservation, the rack remains in the molten paraffin until a manual command is given. The rack is unloaded for further processing. A new rack is loaded. A new rack can be loaded immediately as no cleaning cycle is required for continuous access.

While the above technologies exhibit shorter processing times and automated processing, they still exhibit drawbacks such as the above apparatus involves the use of at least two separate cavities, one being a microwave cavity and the second being a heating cavity outfitted with a resistance. The tissue processor still employs one retort for the complete tissue processing procedure, moving in and out the sequence of reagents (up to 12) and 3 sequence of liquid wax histology grade. The transfer of liquid melted wax, normally between 55°C to 65°C, through the liquid circuit and reagent valve leads to unwanted wax deposits on said valve and inside that circuitry. Without time consuming and disruptive regular cleaning procedures and intensive preventive maintenance, the reliability of these conventional units is seriously compromised. Further, the wax filling and drainage from the retort is not isolated from the reagent circuit, leading to unwanted mixtures and compromised reagent quality.

Further, both in the Pathos and in the conventional tissue processors, the reagents should be placed in containers arranged in a fixed sequence, because the processing protocols pick up the reagent based on their position. Further yet, the conventional systems do not address the added specific challenges involved in dealing with bone, brain or breast tissues. The above exemplary systems are not sufficiently flexible to adapt to laboratory needs and projected workflow.

In view of the prior art and its drawbacks, it is an object of the present invention to propose a technique of tissue specimens processing that further reduces the time necessary for their processing while maintaining the same high standards of accuracy of reading.

Said object is achieved by means of the features of the independent claims. The dependent claims develop further the central idea of the present invention.

According to a first aspect of the present invention, a system for processing tissue specimens is proposed. The system comprises at least a cavity for processing the tissue specimens, and a fluid transfer system to transfer at least one of a plurality of fluids from a plurality of storage containers to the inside and out of said cavity. The cavity is connected at least to one of a microwave generating device for applying microwave radiation to an inside of the cavity, and a thermal energy generating device for generating a positive thermal energy gradient inside the cavity.

The system may further comprise means for creating vacuum inside the cavity. The thermal energy generating device is at least a resistive heating element functionally connected to the cavity. In the system, a transfer device transfers a sample holder comprising the tissue specimens to the inside and out of the cavity, and the transfer device may be a mechanical transfer device activated by a foot pedal.

The cavity is provided with a plurality of openings: at least a first opening that is employed for inserting the sample holder, the sample holder being operatively connected to a cover sealing a cavity opening upon insertion of the sample holder, a second opening that is employed for filling the interior of the cavity at least partially with a fluid and for the subsequent evacuation of the fluid, and a third opening that is employed for filling the interior of the cavity with wax and for the subsequent evacuation of the wax. The cover is designed to seal the cavity in a microwave-leak-proof and fluid-proof fashion when the sample holder is inserted. The third opening allows an operator direct access through a dedicated cover.

The wax may be stored in a wax storage container adjacent to the cavity. The plurality of fluids is at least one of: reagents, wax, and alcohols. The wax storage container stores the wax in melted state. The sample holder can hold at least one or more layers of tissue specimen cassettes.

The system also comprises at least one sensor for detecting the level of the fluid inside the cavity, at least one sensor for detecting the levels of microwave released outside the cavity, and at least one sensor to avoid accidental microwave release in the cavity when the reagent is not properly loaded. The sensor for detecting the levels of microwave is incorporated in the cavity wall.

The fluid transfer system comprises at least a dedicated reagent transfer subsystem and a dedicated wax transfer subsystem that are being separated from each other. A device, such as a gear pump and a mixing station is located between the cavity and the wax storage container. The plurality of storage containers comprises removable reagent containers. The system also comprises a subsystem for collecting and processing used reagents.

According to a further aspect of the present invention, a method for processing organic tissue samples for pathology purposes is proposed. The method for processing tissue specimens comprises transferring a tissue sample holder of a plurality of tissue specimens to a cavity by means of a device, closing the cavity with a cover coupled to said tissue sample holder, processing the plurality tissue specimens in the cavity, selectively transferring at least one fluid by means of a fluid transfer system from a storage container in and out of the cavity, and applying microwave radiation and thermal energy to the inside of the cavity by means of a microwave generating device and a thermal energy generating device being connected to the cavity.

The processing the plurality of tissue specimens in the cavity involves sequentially pumping directly in and out of the cavity at least two fluid reagents for processing the tissue specimens, while microwave radiation is applied inside the cavity during the presence of at least one of the reagents in the cavity in order to generate a first positive temperature gradient in the reagent present, and a second positive energy gradient inside the cavity is generated by employing said thermal energy generating device. The positive energy gradient inside the cavity can as well be generated during a ramping up step of a protocol curve simultaneously employing microwave radiation and thermal energy generated by the thermal energy generating device. The processing of tissue specimens in the cavity further comprises fixing the tissue specimens with formalin or formalin substitutes such as alcohol/glycol base fixatives under microwave irradiation and magnetically driven stirring of reagents, rinsing the tissue specimens with alcohol or saline solution at ambient temperature under normal pressure, dehydrating the tissue specimens with one alcohol or a mixture of different alcohols under microwave irradiation and magnetically driven stirring, clearing the tissue specimens under microwave irradiation and magnetically driven stirring of the reagents, evaporating excess reagents from the tissue specimens under programmable vacuum conditions, and impregnating the tissue specimens under programmable vacuum and under magnetically driven stirring with a impregnation medium. The dehydration and clearing steps may be carried out simultaneously under microwave irradiation, resistive heating, and stirring of reagents for temperature homogeneity with a mixture of ethanol plus isopropanol plus a long-chain hydrocarbon for applications with fatty or very fatty tissues.

During the processing step, both thermal energy and microwave power are applied into the cavity, and the pressure in the cavity can be reduced. The fluid reagents are pumped from storage containers into the cavity by creating vacuum in the cavity. The impregnation medium is applied under vacuum.
In a particular exemplary embodiment of the present invention, all the processing steps are carried out in the cavity that doubles both as microwave/thermal energy cavity. The samples are loaded in the cavity that may be subjected to both microwave and thermal energy. The reagents are sequentially pumped in the first cavity to complete the fixation, dehydration and clearing steps, followed by a drying step performed under vacuum and wax impregnation. The wax is pumped in the activity from a separate cavity where the wax is kept melted. According to a further exemplary aspect of the invention, a first batch of samples is loaded in a first cavity that may be subjected both to microwave and thermal energy. Within the cavity fixation, dehydration, clearing and drying of the test samples is carried out employing at least one of said energy sources, thermal and microwave. Said samples may be upon completion of the above steps transferred manually to the second wax cavity, comprising melted wax, to complete the impregnation phase of said samples with wax, under vacuum. While the batch is in the wax cavity, a second batch of samples is loaded in the first cavity to be subjected both to microwave and thermal energy and to carry out the fixation, dehydration, clearing and drying of the samples under vacuum, employing at least one of said energy sources. The first samples batch must complete the wax impregnation step in the second cavity before the second samples batch completes the reagents/drying steps in the first cavity. Therefore, a processing protocols time for the second run cannot be shorter than the processing time for the first run. The two protocols processing times must be of equivalent time length or the second processing time for the second protocol must longer than the first. At the completion of the wax impregnation in the second cavity, the first samples batch is removed from the wax. The second samples batch can complete the wax impregnation phase, in the second cavity, where the samples have been manually transferred. At this time, should need be, a third set of samples may be inserted into the first cavity to continue the parallel processing.

According to a further aspect of the present invention, the use of a method as set forth above is proposed for processing organic samples, both of human or animal origin, but not limited to said categories as they may be expanded to plant tissue, etc.

According to a further yet aspect of the present invention, a computer program operating on the system of the present invention practices the method of the present invention.

Further features, advantages and objects of the present invention will became evident for the person skilled in the art when reading the following detailed explanation of an embodiment of the present invention taken in conjunction with the figures of the enclosed drawings.

Embodiments are also directed to apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed to methods by which the described apparatus operates. It includes method steps for carrying out every function of the apparatus.

### BRIEF DESCRIPTION OF THE DRAWINGS

The foregoing form as well as other forms, features and advantages of the invention will become further apparent from the following detailed description of the embodiments, read in conjunction with the accompanying drawings. The detailed description and drawings are merely illustrative of the invention rather than limiting, the scope of the invention being defined by the appended claims.

Fig. 1 shows an exemplary device for carrying out the present invention.

Fig. 2 is a schematic representation of the exemplary tissue processing device which can be used for carrying out to the present invention.

Fig. 3 is a flowchart representing the functionality of a system according to the present invention.

Fig. 4 shows in further detail the exemplary device for carrying out the present invention.

Fig. 5 another exemplary device for carrying out the present invention.

FIG. 6 shows a screenshot of software operating on a tissue processing device in accordance with one embodiment of the present invention.

FIG. 7 shows a further screen shot of a software operating on a tissue processing device in accordance with another embodiment of the present invention.

FIG. 8 shows a further yet screen shot of a software operating on a tissue processing device in accordance with another embodiment of the present invention.

FIG. 9 shows another screen shot of a software operating on a tissue processing device in accordance with another embodiment of the present invention.

### DETAILED DESCRIPTION OF THE INVENTION

Reference will now be made in detail to the various embodiments of the invention, one or more examples of which are illustrated in the figures. Each example is provided by way of explanation of the invention and it is not meant as a limitation of the invention. For example, features illustrated or described as part of one embodiment can be used on or in conjunction with other embodiments to yield yet a further embodiment. It is intended that the present invention includes such modifications and variations.

Within the following description of the drawings, the same reference numbers refer to the same components. Generally, only the differences with respect to the individual embodiments are described. Without limiting the scope of protection in the following description the components thereof will exemplarily be referred to either as discussed in the appended legend of the elements or by an appropriate synonym. A person skilled in the art will know what is meant by either the elements or their equivalents.

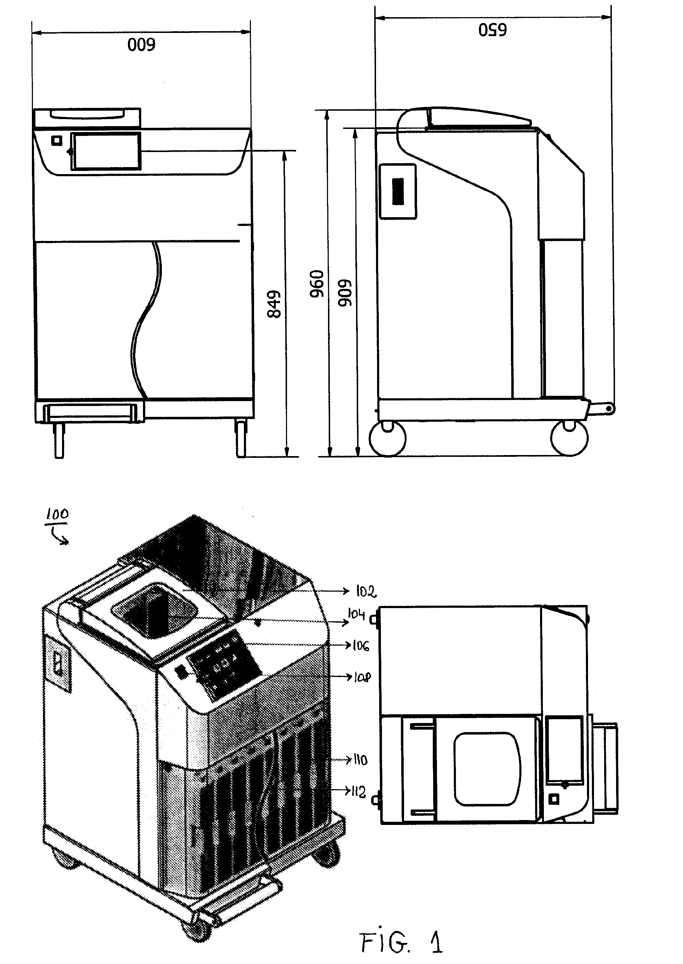

Fig. 1 shows an exemplary device for carrying out the present invention.

The system for processing tissue specimens 100, illustrated in Fig. 1, is shown in the figure either in perspective and with a front, side and top view. The sizes denoted on the various views are only exemplary in nature and are not meant to restrict in any way the actual implementation of the system 100.

The system for processing tissue specimens 100 comprises at least a cover 102 that provides microwave-proof and fluid-proof seal to a cavity for processing tissue specimens 104. For facilitating the user operation of the system for processing tissue specimens 100, the system is outfitted at least with a control panel 106 and with an on/off button 108. Control panel 106 may be with a touch screen implementation and will allow a user to select a desired protocol upon loading the tissue specimen samples. The control panel 106 is aimed to be implemented with user friendly software and it will be an advanced touch terminal. The user will enter the number of loaded cassettes with tissue samples in order to execute the appropriate protocol. A main start-up screen may be customized to display the user's favourite, most utilized programs ready for immediate selection and start (up to 16 programs). Further, the embedded software enables the reagent management, by software controlled transfer of processing reagents, eliminating therefore the need for manual reagent handling. This results in an additional increased safety feature embedded in the system of the present invention. Further, additional advantages for the control panel 106 might be identified, such as enabling running of software that allows simple customization of preset programs, enables fully automatic control of process parameters (temperature, time, agitation, vacuum, power), allows programmable "delayed start" time for pre-heating of wax, and allows programmable "delayed start" time for after-hours operation, to name only a few of its inherent advantages.

The system 100 illustrated in Fig. 1 is provided with a front access door 112 that opens sideways to allow the operator access to a plurality of removable reagent containers 110. The system is in no way limited to having a front access door 112, since this is merely a design choice. The reagent container 110 may be located on a pull out drawer that allows the operator to easily replace the spent reagent tanks and containers and also to have access to a waste tank (not shown) and service said tank. Access to a wax chamber (not shown) could as well be envisioned through this front loading access door, but the wax can be used repeatedly for periods of up to several months at least, not requiring a regular change, other than the occasional top-up for wax absorbed by the tissue samples. The wax storage container is fixed and has a concealed drainage outlet tap attached at the front. The drainage tap may be accessed as well by opening the unit's front panel cover (single access key movement). A bayonet connector with a long drainage tube is attached to the tap, allowing the wax to be drained by gravity feed into a container. Replacement wax is added directly into the wax retort.

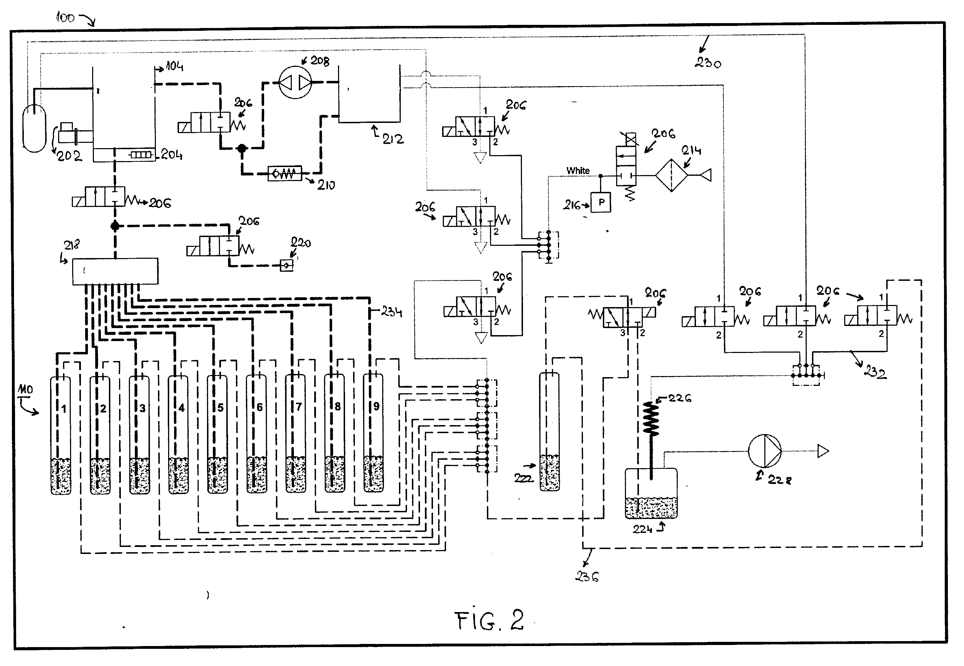

Fig. 2 is a schematic representation of the exemplary tissue processing device which can be used for carrying out to the present invention.

As shown in the figure, system 100 comprises a cavity 104, for example made from stainless steel. The cavity is heated by coupling microwave radiation from a radiation source 202 and via one or more resistive cavity thermal energy generating device(s) 204, functionally connected for example to the wall and/or bottom of the cavity 104. The cavity may comprise several resistive cavity thermal energy generating (heating elements) provided respectively at different positions in the cavity, and optionally being of different natures. The cavity 104 is used to perform therein several of the sequential steps of the tissue preparation process as defined in the introductory portion of the specification. The resistance heating in the cavity is also used during the reagent steps to accelerate the ramping step of the temperature protocol curve, with employing combined microwave energy and conductive heating.

In order to carry out several different steps of the tissue preparation process sequentially within the same cavity 104, the cavity 104 is designed such that one or more, essentially different fluids from containers 110 (1 to 9) are selectively transferred into and drained from the cavity 104. Although usually fluids from different storage containers are used sequentially, in some cases also a mixture of fluids from different storage containers can be used. The cavity 104 may provided with ultrasonic level sensor(s) (not shown) that indicates that a fill up of appropriate level of reagent has occurred, level that is determined by the processing software according with the number of specimens processed.

Cavity 104 is as well connected via fluid circuitry tubing and adjuvant elements, such as valves 206, gear pump 208, and by-pass 210, to a wax storage container 212. During the step of infiltrating the tissue cavities with a support medium, the wax, that is stored in the wax container 212 at a temperature between 55 and 65 degrees Celsius in melted state, is pumped in the cavity 104. The excess wax and the flushed out wax are returned to the wax storage container 212. The wax is a histology paraffin grade wax, specifically suitable for the final infiltration step and it will be reused several times before discarded.

Alternatively, as it will be further discussed in connection with another embodiment of the present invention, the wax storage container can be used as second cavity for in a dual/parallel processing modality that will be described further in detail further in the present document for the present invention.

The commercially available conventional tissue processors employ one retort for the complete tissue processing procedure, moving in and out the sequence of reagents (up to 12) and 3 sequence of liquid wax histology grade. The transfer of liquid melted wax, normally between 55°C to 65°C, through the liquid circuit and reagent valve is a critical technical point for the instruments' performance. If the users don't perform regular cleaning procedure(s) and intensive preventive maintenance on these conventional type units, their reliability is seriously compromised.

To improve the wax filling and drainage from the cavity and to keep it isolated from the reagent circuit, a gear pump 208 or a mixing station is allocated between the cavity 104 and the wax storage contained 212. The gear pump 208 can easily distil the liquid wax in the wax storage container 212 avoiding clough or occlusions due to non perfectly melted wax residues.

These processes, as well as other processes within the system for processing tissue specimen, are controlled via an electronic board (not shown) functionally connected with the control panel 106. For the pumping and draining process of cavity 104 the electronic board controls valves 206 (respectively one for each of the containers 110, or a rotary valve 218), and a vacuum pump 228 for creating vacuum in the interior of cavity 104 in order to suck out the selected fluid from any or several of the containers 110.

Before carrying out the corresponding histoprocessing step, a fluid from any of the containers 110 is transferred into the cavity 104. Then one of the sample preparation steps is carried out under application of microwave power from the microwave source (if needed), and subsequently the fluid used for the specific step is drained from the cavity 104 either passively via gravity force, or actively with the application of vacuum into the containers. The used fluid from the cavity 104 is drained back to the respective container 110 from which it has been initially sucked into the cavity 104 or directly to a waste tank 222. Usually, a fluid can be used for several cycles of the tissue specimens processing.

Microwave sensors (not shown) are normally positioned in microwave instrumentation outside the microwave chamber to detect eventual electromagnetic leakages. Normally these sensors are located close to the most sensible point, that is the microwave chamber opening. The system of the present invention proposes that a microwave leakage sensor is also built in the cavity wall inside the cavity. The sensor is an extra safety device for the tissue specimens protection. Its purpose is to detect inappropriate microwave release during the steps in vacuum or during reagent transfer. A dedicated software program and hardware activate/deactivate the sensor according to the processing steps to be monitored. The system of the present invention further proposes at least one sensor for avoiding accidental microwave release in the cavity when the reagent is not properly loaded.

The tissue specimens to be processed are held in a rack (not shown) having for example 210 specimens holders (cassettes), respectively one for each sample. The rack is functionally connected to a cover 102 for the cavity 104. When the rack is inserted into the cavity 104, the cover 102 will close the cavity 104 in a microwave-leak-proof and fluid proof fashion, when the rack is entirely inserted into the cavity 104. Note that the rack, when entirely inserted, has some clearance to the bottom wall of the cavity, most especially if the position chosen for the cavity thermal energy generating device 204 is at the bottom of the cavity 104. The transfer of the rack attached to the cover 102 in and out of the cavity 104 is carried out manually or by a foot pedal mechanism.

Once all necessary tissue processing steps using a certain fluid have been performed, the fluid is pumped out. Prior to the wax impregnation the samples are subjected to vacuum drying in the cavity 104, in the absence of fluid to remove superficial fluids from the tissue's surface and part thereof from within the samples. This vacuum drying step may be performed with or without microwaves and with and without resistive heating. The processing is then completed with the tissue processed for example being impregnated using wax.

In order to promote and accelerate the impregnation step, vacuum can be applied to the cavity 104 via the vacuum pump 228. As soon as the impregnation step is finalized, the samples held in the rack are moved outside by the operator through the foot pedal mechanism and can then be used for further investigation procedures. The sample rack comprises several layers of juxtaposed specimen cassettes.

With regards to the design of removable reagent containers 110, they are designed such that allow a better flexibility for processing protocol, compared for example with either the automated unit or the standard conventional histology tissue processors. In the known automated and in the conventional tissue processors, the reagent should be placed in the container with a fix sequence, because the processing protocols pick up the reagent based on their position.

The present invention proposes a new reagent container configuration and a new unit software management tool that allow the user to allocate the different reagents used during the processing protocol, in any of the front containers.

The tissue specimen processing system comprises up to 10 front containers to accommodate at least 1 fixative, 2 alcoholic rinses or saline solution, 1 dehydration reagent (preferably Ethanol reagent grade alcohol), 1 clearing reagent (preferably Isopropanol reagent grade alcohol) and 1 waste for vapours trap.

The rest of the containers can be used to allocate extra alcohols, in order to reduce the number of exhaust reagents replacements, or to add other solutions, in order to create additional procedures as indicated below. This reagent flexibility is obtained by the dedicated software, that is able to load the correct reagent using the correspondent name of the step of the protocol in use and not by using a numeric sequence, from the first container to the last, as adopted in the conventional tissue processors.

The reagent flexibility allows laboratories to comply with the most recent pathology guidelines, in particular with the restricted protocol for the breast tissue preparation, released by CAP/ASCO (College of American Pathologists/ American Society of Clinical Oncology) and by the FDA (Food and Drug Administration) for the US market. The new CAP/ASCO guidelines strictly recommend that samples do not exceed the 48 hour fixation in formalin. This restriction could result in a logistic problem for the laboratory in occasion of the weekend or in occasion of holidays. In these situations, if a breast tissue specimen is received late on Friday afternoon, it cannot be prepared during the same day, but it must stay in the fixative (formalin) before to be completely processed on the following Monday morning. In this case, the exposition to the tissue in formalin is longer than 48 hours. With reagent flexibility, the user can create a post-fixative step using saline solution, or 70% Ethanol alcohol to move the tissues from formalin after the 48 hour and before the rest of the processing protocol starts.

The number of necessary cavities for carrying out all necessary sample processing steps therefore, according to the present invention, can be reduced to one since all the steps, including the impregnation step, can be carried out within the same cavity 104 that may be subjected both to thermal and microwave energy. Time and space can be saved by the fact that while different subsequent processing steps are carried out in the same cavity 104, the samples can remain in said cavity and no intermediate transfers are necessary. While the samples remain within the cavity 104, the necessary fluids from the storage containers 101 are sucked in and drained, respectively. Time is also saved, compared to conventional heated histoprocessing systems, by application of microwave irradiation in combination with resistive heating.

Although the cavity 104 is functionally connected to a microwave generating device and heat generating device, it is not necessary to apply microwave power or heat, concomitantly and they may be applied separately, during the processing steps carried out in the cavity. The pressure in the cavity can be reduced by using the vacuum pump 228 during any of the tissue processing steps carried out in the cavity 104. The typical steps carried out in the cavity 104 are the steps of fixation, alcohol rinsing, dehydration, clearing and/or vacuum evaporation of the samples.

Although not shown in Fig. 2, the embodiment of the invention is provided with a substantial number of additional safety and sensor devices, some of which have already been mentioned earlier in the document. Specifically, temperature sensors might be provided, either for detecting the temperature within the wax storage container 212, and being placed either at the bottom or laterally at the wall of the wax storage container, or for detecting the temperature of the wax within the cavity 104, again preferably incorporated within the walls of the cavity. A plurality of stirring devices might as well be provided both for the cavity 104 and for the wax storage container 212, which may be activated magnetically. The rotation of the stirring devices is electronically controlled by a dedicated electronic board. A safety device for ensuring a proper closing of the cover 102 on the top of the cavity might as well be provided.

The several electronic boards as well as a user interface/control panel 106, which can be a touch screen terminal, are connected by communication cable(s). Also, wiring (not shown) connects the electronic boards with all connected sensors and devices. An electronic board might be specifically designated to operate and control the heating of the cavity. A plurality of valves 206 might be electro/pneumatic valves which are used to distribute compressed air from a compressor (having an air container and being controlled by the electronic boar). Silicone tubing 230 dedicated for the vacuum circuitry connects the condenser and compressor with at least the cavity and wax storage container 212. The valves 206 might be controlled by micro-controllers installed on the electronic board. Electric valve control the communication of the vacuum pump 228 and the cavity 104, wherein said electric valve is controlled by the micro-controller installed on the electronic board. An electric valve is provided as well for the communication between the vacuum pump 228 and the in-used reagent storage containers 110. A pressure sensor for the absolute pressure in the vacuum circuitry might also be provided. The output value of the pressure sensor is supplied to the electronic control board to control the vacuum in the vacuum circuitry.

A circuitry for the communication between the electronic board and the connected sensors, valves and devices, an electric valve to allow air from the atmosphere (fresh air) to get into the manifolds, pneumatic valves for opening respectively one of the associated storage containers, a pneumatic valve for the communication between the manifolds and the cavity might as well be provided. A plurality of pneumatic valves respectively opening and closing tubes for loading new fluid reagents and unloading exhausted fluid reagents, a level sensor checking the presence and the level of a fluid reagent in the loading tube, level sensors respectively responding to difference levels of fluid reagents in the cavity 104 as well may be provided. A plurality of temperature sensors are provided for reading the cavity temperature of cavity 104 at different positions and being placed either at bottom or laterally at the wall of cavity 104. A plurality of safety switches detecting a properly microwave and fluid sealed closure of the opening of the cavity 104 by the cover 102 may be provided. A person skilled in the art will be aware of various other elements provided in the configuration of the embodiment in order to provide for safety and monitoring functions.

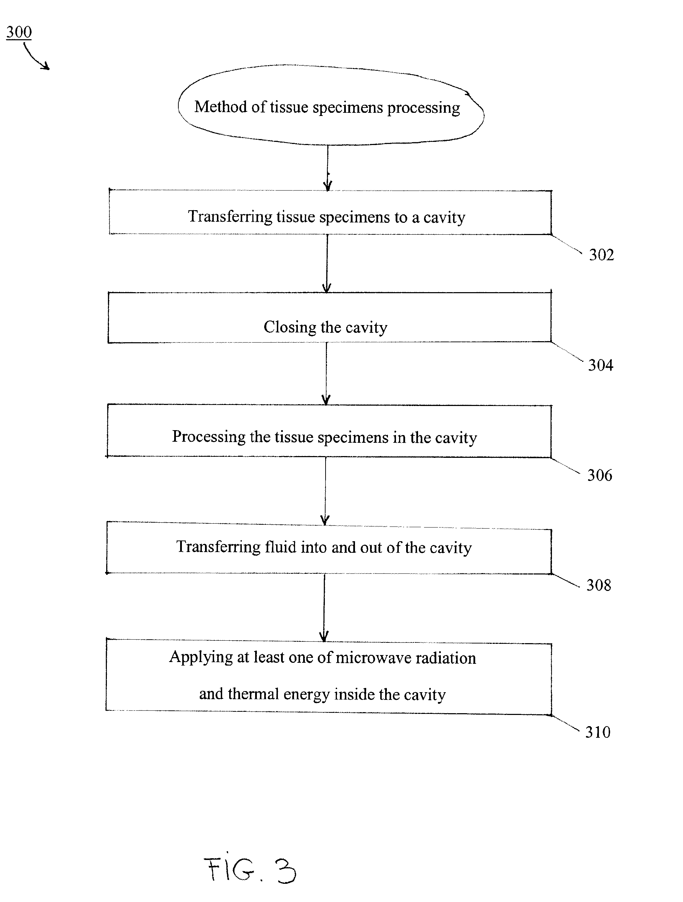

In accordance with the novel method proposed by the present invention for processing tissue specimens, and illustrated in the flow chart of Fig. 3, a tissue sample holder of a plurality of tissue specimens is transferred to a cavity by manual means or by a device. The cavity is closed with a cover coupled to the tissue sample holder. The plurality tissue specimens are processed in the cavity. A fluid or a mixture of fluids is selectively transferred by means of a fluid transfer system from a storage container in and out of the cavity, and microwave radiation and thermal energy are transferred to the inside of the cavity by means of a microwave generating device and a thermal energy generating device being connected to the cavity. In a particular exemplary embodiment of the present invention, all the processing steps may be carried out in the cavity that doubles both as microwave/thermal energy cavity. The samples are loaded in the cavity that may be subjected to both microwave and thermal energy. The reagents are sequentially pumped in the first cavity to complete the fixation, dehydration and clearing steps, followed by a drying step performed under vacuum and wax impregnation. The wax is pumped in the activity from a separate cavity where the wax is kept melted.

The processing of the plurality of tissue specimens in the cavity involves at least sequentially pumping directly in and out of the cavity at least two fluid reagents for processing the tissue specimens. The microwave radiation is applied inside the cavity during the presence of at least one of the reagents in the cavity, in order to generate a first positive temperature gradient in the reagent present, and a second positive energy gradient inside the cavity is generated by employing the thermal energy generating device. Alternatively, a positive energy gradient inside the cavity is generated during a ramping up step of a protocol curve simultaneously employing microwave radiation and thermal energy generated by the thermal energy generating device.

During the processing of tissue specimens in the cavity the tissue specimens are fixed with formalin under microwave irradiation and magnetically driven stirring of the reagents. The tissue specimens are rinsed with alcohol at ambient temperature under normal pressure followed by dehydrating the tissue specimens with one alcohol or a mixture of different alcohols under microwave irradiation and magnetically driven stirring. Further, the tissue specimens may be cleared under microwave irradiation and magnetically driven stirring of the reagents by evaporating excess reagents from the tissue specimens under programmable vacuum conditions. The tissue specimens are impregnated under programmable vacuum and under magnetically driven stirring with a impregnation medium, such as wax.

The dehydration and clearing steps are carried out either by a simultaneous dehydration/clearing under microwave irradiation, resistive heating, and stirring of reagents for temperature homogeneity with a mixture of ethanol plus isopropanol plus a long-chain hydrocarbon for applications with fatty or very fatty tissues. During the evaporation step, both thermal energy and microwave power may be applied into the cavity, and the pressure in the cavity is reduced. The fluid reagents are pumped from storage containers into the cavity by creating vacuum in the cavity. The impregnation medium may be applied under vacuum.

The main advantages of the present invention can be described as follows: The system according to the present invention applies microwave radiation and heat to a single cavity which also serves as a processing cavity into which cassettes for holding the organic specimen(s) can be placed and fluid reagents can pumped in and out. The processing is automated by applying microwave radiation and heat to reagents that are sequentially pumped in and out of the cavity. This allows for a greater number of samples to be prepared rapidly simultaneously. The wax impregnation can be performed at reduced pressures of within the range 50-900 mBar, for example 100 mBar. The cassette rack can hold a large number of cassettes and tissue samples of various thicknesses that can be simultaneously processed. A magnetic agitation (stirring) can be carried out for all steps with the exception of the vacuum drying step. The rotational speed of the stirrer can be controlled automatically. The cavity is used for all steps such as impregnation step, i.e. the fixation, alcohol rinsing, dehydration and clearing including the vacuum drying.

The system of the present invention allows for the combined rapid microwave fixation, decalcification and processing of bone and bone marrow tissues. The microwave energy accelerates the complete tissue histology sample preparation from the first fixation step to the final wax infiltration. Bone tissue samples requires that the calcium must be removed prior to the sectioning of tissue for microscopic analysis. In prior art it is known that microwave irradiation of tissue samples will accelerate the process of decalcification and fixation, when compared to routinely accepted bench tissue specimen processing methods. The decalcification step is normally carried out with mixture of acids (formic, nitric, hydrochloric) at low percentage (normally below 20%). In system of the present invention, the flexibility of the reagent containers allows the use of decalcifying acid in one of the front containers, to obtain the complete preparation of bone tissue sample, combining fixation, decalcification and histology processing in one unit.

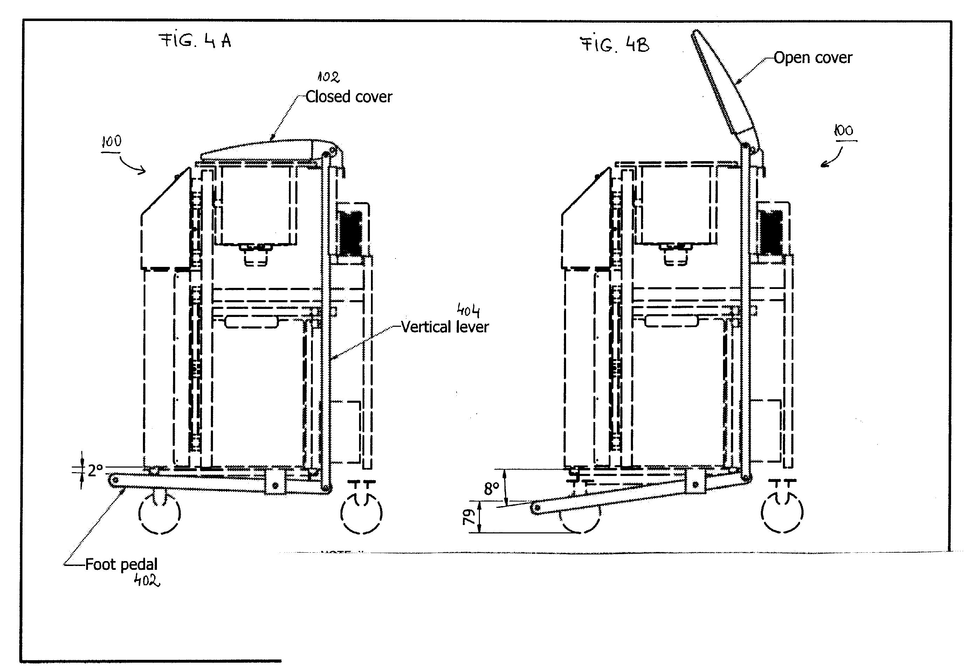

Fig. 4 shows on further detail the exemplary device for carrying out the present invention.

The system for processing tissue specimens 100, illustrated in Fig. 1, is shown in further detail in FIG. 4, regarding its constituent parts.

The system for processing tissue specimens 100 that comprises at least a cover 102 is shown in a first lateral view with said cover 102 in closed state. To facilitate the insertion of the tissue samples, manual insertion of said samples by a user is effected through said door 102, while the door is auctioned by a mechanical foot pedal 402 interconnected with the door 102 by means of a vertical lever 404. By facilitating that the user may act upon the door with the foot, the user may have its hands free for other purposes.

Initially it is envisioned that the foot pedal is in a position approximately parallel with the plane of the surface where the unit 100 is located, only slightly inclined versus said surface as to facilitate a good engagement between the foot pedal and the foot of the user. As shown in the exemplary embodiment of Fig. 4, a deflection angle of approximately 2 degrees may be present between the horizontal plane of the surface where the unit 100 is located and the foot pedal 402.

Once the user acts upon the foot pedal 402, changing/enlarging therefore its inclination angle up to 8 degrees deflection angle, a mechanism 404 that consists at least of a vertical lever will engage the door 102 and the door will be opened, facilitating therefore the insertion of the samples subject to analysis manually by the user. In an alternative embodiment, the cover 102 has built in a rack sample holder, and as such leaves the users' hands free for other applications. As exemplarily shown in FIGs. 4, the foot pedal is conveniently placed at the bottom of unit 100 as such that it does not allow for a deflection angle that will interfere with the movement in horizontal plane of the unit.

The closing mechanism could have as well a spring load to ensure a correct microwave and vacuum parameters within the enclosed cavities.

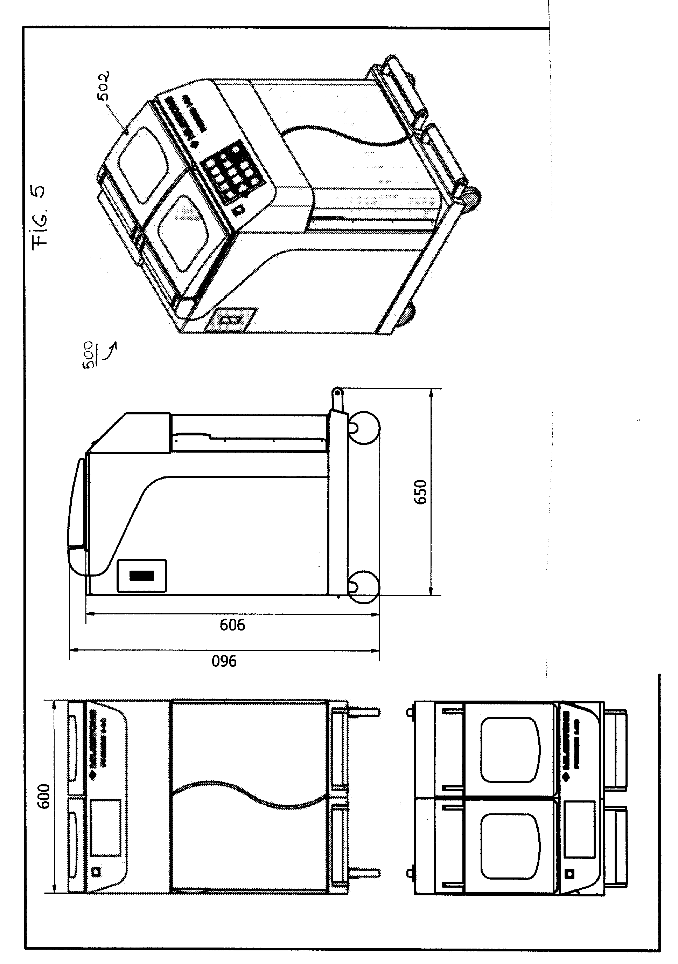

Fig. 5 shows another exemplary device for carrying out the present invention.

The system for processing tissue specimens 500, that comprises at least all the features previously discussed in the present document in connection with FIG. 1, allows a user direct access to the wax storage cavity through an additional door 502 that covers the wax storage cavity 212.

The cover 502 over the wax storage cavity 212 allows easy loading of paraffin pellets by an operator that operates said door either manually or through a foot pedal (not shown). Further, the presence of direct access to the wax storage cavity by a user through said door 502 also facilitates the Dual or Parallel processing of samples in semi-automatic mode by said system for processing tissue specimens 500.

When the system for processing tissue specimens 500 is programmed to function in parallel processing, the operator manually or automatically loads the rack of samples in the cavity 104 that may function both as microwave and thermal cavity, and the steps of fixation, rinsing, dehydration, clearing and evaporation under vacuum conditions are performed as discussed above in connection with an exemplary method for the present invention. At the end of the drying step, the rack can be manually transferred into the second, wax storage, cavity to complete the final impregnation phase, under vacuum. The wax storage cavity may be connected to the vacuum circuit to allow an optimal infiltration with vacuum (down to 100mBar) for the larger sample blocks.

When the first rack is transferred to the wax storage cavity, a second rack can be loaded to the main microwave/thermal cavity to start a second program run. The first cassettes batch must complete the wax impregnation step in the second cavity before the second cassettes batch completes the reagents/drying steps in the first cavity. The protocol time of the second run cannot exceed the wax infiltration time of the first run in order to avoid overlapping the two cycles. At the completion of the impregnation in the second cavity, the first cassettes batch is removed from the wax. The second cassettes batch can complete the wax impregnation phase by a manual transfer in the second cavity. At this point it is possible to start the processing of a third batch of samples in the first cavity to continue parallel processing.

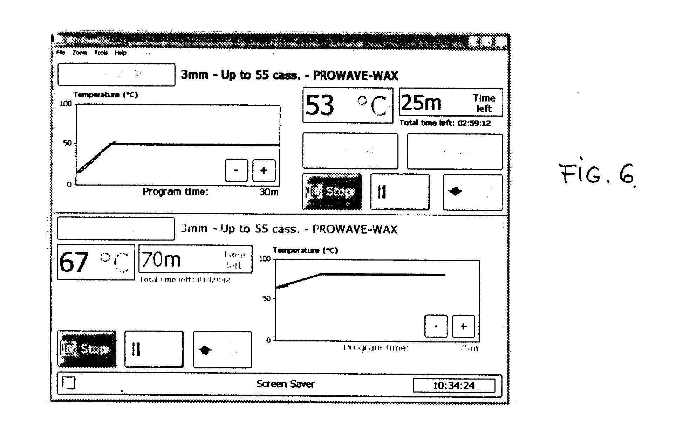

To allow a dual/parallel processing, the software is adapted to accommodate two protocols run in the same screen, for example as illustrated in Fig. 6. In Fig. 6 the top part of the screen controls the reagents steps in the microwave cavity and the bottom part of the screen controls the wax infiltration in the wax cavity.

This parallel process can increase up to 40% the productivity (sample processed per hours).

As illustrated in Fig. 6 that represents a screenshot of software operating on a tissue processing device in accordance with the above described embodiment of the present invention, two different protocols run concomitantly on the same screen, exemplarily located on the lower side of the screen and on the upper side of the screen. The various temperature and time sensors feed information into the respective modules, information that is displayed in an intuitive manner for the benefit of the user as illustrated by Fig. 6.

Referring back to the exemplary screen shot illustrated by Fig. 6 it is of note to remark that the worldwide histology laboratories are facing problems related to the small number of available qualified histotech specialists. This problem that involves less well trained and experienced personnel has as an undesirable consequence the increase of potential human error in the sample preparation steps.

One of the solution to reduce the human potential error during the instrument's operation, is to provide its users a user centric software interface.

It is envisioned that the system proposed by the present invention is provided with an easy to use icon driven software as well an intuitive protocols screen that allow a single touch selection for the most used programs.

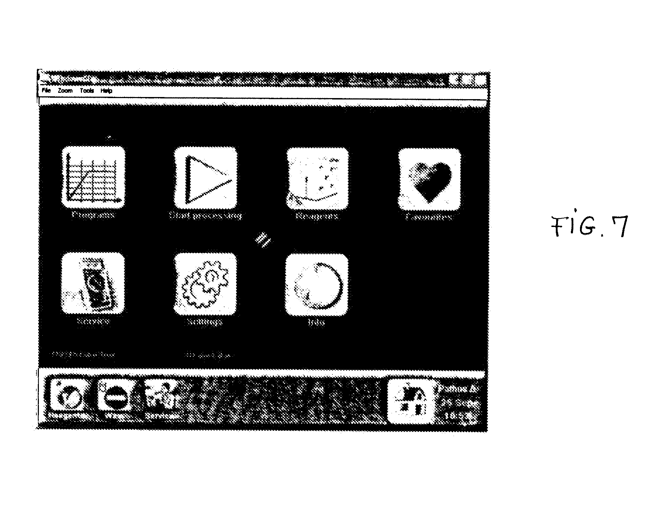

A screen shot of such user friendly intuitive screen is provided in Fig. 7.

The software user interface is also built to recreate the most common software of the electronic personal devices (i.e. cell phones), in order to help the operator with a more "friendly feeling". It has been demonstrated that a difficult to understand software it is more difficult to learn and remember, therefore leading to more errors in the course of its day to day use.

The touch screen user interface who's screen shot is illustrated in Fig. 7 will provide a plurality of easy to use intuitive icons, such as an icon that act as interface with programs, start processing, reagents, favourites, service, seating's, and info. Said user interface is envisioned to be user friendly and customisable to the user's specification with icons that re mostly used during daily operations.

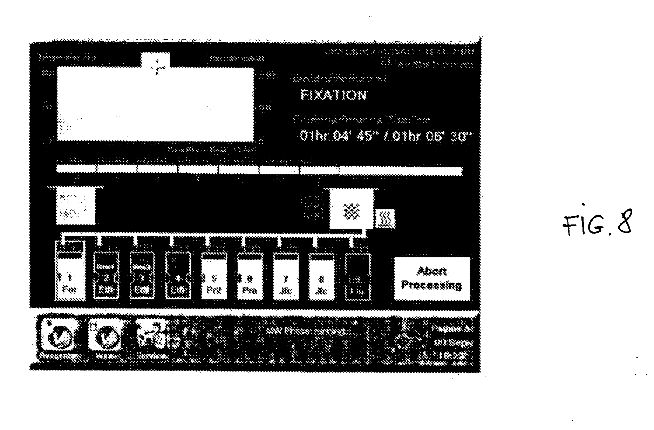

An example of a screen shot that a user might experience and use if the icon processing is acted upon is represented in Fig. 8. As it may be observed from the figure, the user can easily and intuitively follow the processes that take place and at any time it may exactly identify which phase of the sample tissue processing has been completed. Temperature time and reagent levels, among others may be easily observed in one easy to asses view.

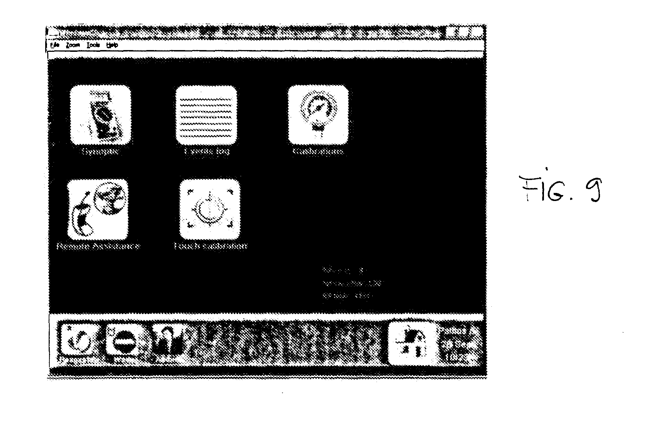

The continuing improvement of the Internet technologies facilitate the remote monitoring of the system's instrumentation and software. The software embedded in the system of the present invention is provided among others with a feature that facilitates remote assistance dial up, as it may be observed in the screen shot of FIG. 9.

For example, Via Internet, after receiving authorization from the senior operator, the system's software can be connected to a customer service center located remotely, for example at the manufacturing facility. This feature can be helpful to update the instrument software with the latest versions or to add new protocols. The peculiarity of the remote assistance software of the invention is the possibility to control all the components and operation of the instruments (i.e. moving reagents in/out the cavities, start a mw step etc.) for a more accurate unit test and troubleshooting in case of technical problems.

While the invention has been disclosed in connection with the embodiments shown and described in detail, various equivalents, modifications, and improvements will be apparent to one of ordinary skill in the art from the above description. Such equivalents, modifications, and improvements are intended to be encompassed by the claims set forth hereinafter.

### Legend:

- 100:: system for processing tissue specimens;
- 102:: cover;
- 104:: cavity for processing tissue specimens;
- 106:: control panel;
- 108:: on/off button;
- 110:: removable reagent containers;
- 112:: access door;
- 202:: microwave generating device;
- 204:: cavity thermal energy generating device;
- 206:: valve(s);
- 208:: gear pump;
- 210:: by-pass;
- 212:: wax storage container;
- 214:: air filter;
- 216:: pressure transducer;
- 218:: rotary valve;
- 220:: external quick coupling;
- 222:: waste tank;
- 224:: cooltrap;
- 226:: condenser;
- 228:: vacum pump;
- 230:: silicone tube, vacuum circuit;
- 232:: cooper tube;
- 234:: tubing, fluid circuit, and
- 236:: tubing, air/vacuum circuit.

## Claims

**1.** A system for processing tissue specimens, comprising:
a plurality of cavities for processing said tissue specimens,
wherein each of said plurality of cavities is connected to at least one of a microwave generating device for applying microwave radiation to an inside of said cavity, and a thermal energy generating device for generating a positive thermal energy gradient inside said cavity, and
a fluid transfer system to transfer at least one of a plurality of fluids from a plurality of storage containers to the inside and out of each cavity of said plurality of cavities.

**2.** The system of claim 1, further comprising:
means for creating vacuum inside said cavity.

**3.** The system of claim 1, wherein said thermal energy generating device is at least a resistive heating element functionally connected to said cavity.

**4.** The system of claim 1, wherein a transfer device transfers a sample holder comprising said tissue specimens to the inside and out of said cavity, and wherein said transfer device is a mechnical transfer device activated by foot pedal.

**5.** The system of claim 1,
wherein said cavity is provided with a plurality of openings,
wherein a first opening is employed for inserting said sample holder, the sample holder being operatively connected to a cover sealing a cavity opening upon insertion of the sample holder;
wherein a second opening is employed for filling the interior of said cavity at least partially with a fluid and for the subsequent evacuation of the fluid;
wherein a third opening is employed for filling the interior of said cavity with wax and for the subsequent evacuation of the wax, and
wherein said cover is designed to seal said cavity in a microwave-leak-proof and fluid-proof fashion when said sample holder is inserted.

**6.** The system of claim 5, wherein said third opening allows an operator direct access through a dedicated cover.

**7.** The system of claim 1, wherein said wax is stored in a wax storage container adjacent to said cavity, and
wherein said plurality of fluids is at least one of reagents, wax, and alcohols.

**8.** The system of claim 7 , wherein said wax storage container stores said wax in melted state.

**9.** The system of claim 1, wherein the sample holder can hold at least one or more layers of tissue specimen cassettes.

**10.** The system of claim 1, further comprising:
at least one sensor for detecting the level of the fluid inside the cavity,
at least one sensor for detecting the levels of microwave released outside the cavity,
wherein said at least one sensor for detecting the levels of microwave is incorporated in the cavity wall, and at least one sensor for avoiding accidental microwave release in the cavity when the reagent is not properly loaded.

**11.** The system of claim 1, wherein said fluid transfer system comprises at least a dedicated reagent transfer subsystem and a dedicated wax transfer subsystem, said reagent transfer subsystem and said wax transfer subsystem being separated from each other.

**12.** The system of claim 1, wherein a device, such as a gear pump and a mixing station is allocated between the cavity and the wax storage container.

**13.** The system of claim 1, wherein said plurality of storage containers comprises removable reagent containers.
The system of claim 1, further comprising a subsystem for collecting and processing used reagents.

**15.** A method for processing tissue specimens, comprising:
transferring a tissue sample holder of a plurality of tissue specimens to one cavity of a plurality of cavities by means of a device;
closing the cavity with a cover coupled to said tissue sample holder;
processing the plurality tissue specimens in the cavity;
selectively transferring at least one fluid by means of a fluid transfer system from a storage container in and out of the cavity, and
applying at least one of microwave radiation and thermal energy to the inside of the cavity by means of a microwave generating device and a thermal energy generating device being connected to the cavity.

**16.** The method of claim 15, wherein said processing the plurality of tissue specimens in the cavity comprises:
sequentially pumping directly in and out of said cavity at least two fluid reagents for processing the tissue specimens,
wherein microwave radiation is applied inside said cavity during the presence of at least one of the reagents in the cavity in order to generate a first positive temperature gradient in the reagent present, and
wherein a second positive energy gradient inside the cavity is generated by employing said thermal energy generating device.

**17.** The method of claim 15 , wherein a positive energy gradient inside the cavity is generated during a ramping up step of a protocol curve simultaneously employing microwave radiation and thermal energy generated by the thermal energy generating device.

**18.** The method of claim 15, wherein said processing of tissue specimens in the cavity further comprising:
fixing said tissue specimens with at least one of formalin and formalin substitutes under microwave irradiation and magnetically driven stirring of said reagents;
rinsing said tissue specimens with at least one of alcohol and a saline solution at ambient temperature under normal pressure;
dehydrating said tissue specimens with one alcohol or a mixture of different alcohols under microwave irradiation and magnetically driven stirring;
clearing said tissue specimens under microwave irradiation and magnetically driven stirring of the reagents:
evaporating excess reagents from said tissue specimens under programmable vacuum conditions, and
impregnating the tissue specimens under programmable vacuum and under magnetically driven stirring with a impregnation medium.

**19.** The method of claim 18, wherein said dehydration and clearing steps are carried out by a simultaneous dehydration/clearing under microwave irradiation, resistive heating, and stirring of reagents for temperature homogeneity with a mixture of ethanol plus isopropanol plus a long-chain hydrocarbon for applications with fatty or very fatty tissues.

**20.** The method according of claim 18, wherein both thermal energy and microwave power are applied into the cavity during the evaporation step, and the pressure in the cavity is reduced.

**21.** The method of claim 18, wherein the fluid reagents are pumped from storage containers into said cavity by creating vacuum in the cavity.

**22.** The method of claim 18, wherein said impregnation medium is applied under vacuum.

**23.** The method of any of the preceding claims, wherein the cavity at least one of the steps of fixation, alcohol rinsing, dehydration, clearing and vacuum drying of the specimens is carried out.

**24.** The method for processing tissue specimens of claim 15, wherein by transferring a tissue sample holder of a plurality of tissue specimens to a cavity by means of a device said tissue transfer holder is transferred directly into the wax storage cavity through said dedicated door.

**23.** The method for processing tissue specimens of claim 24, wherein while a first tissue sample holder of a plurality of tissue specimens is transferred into said wax storage cavity a second tissue sample holder of a plurality of tissue specimens is transferred into said microwave cavity, thereby facilitating parallel processing of said first and second plurality of tissue specimens.

**24.** The method for processing tissue specimens of claim 24, wherein a protocol processing time for said second tissue sample is shorter than a protocol processing time for said first tissue sample.

**25.** The method for processing tissue specimens of claim 24, wherein a software program monitoring said processing is a dual processing software that monitors and processes at the same time the processing of the at least first and second protocol processing.
